# EUROPÄISCHE PATENTANMELDUNG

(11) **EP 1 707 667 A1**
(43) Veröffentlichungstag der Anmeldung: **04.10.2006**
(21) Anmeldenummer: 06005833.6
(22) Anmeldetag: 22.03.2006
(51) Int. Cl.: D06N 7/00, C09J 7/04

(54) **Textiles Flächengebilde zur Verwendung als Wandbekleidung**

(30) Priorität: 01.04.2005 DE 202005005208 U
(71) Anmelder: Surtech GmbH Wigbert H. Sauer, 71732 Tamm (DE)
(72) Erfinder: Sauer, Wigbert H., 71229 Leonberg (DE)
(74) Vertreter: Sulzbach, Werner

(57) **Zusammenfassung**

Die Erfindung betrifft ein textiles Flächengebilde zur Verwendung als Wandbekleidung, das aus einem mineralfaserfreien Faservliesstoff gebildet und mit einer selbsthaftenden Beschichtung versehen ist, wobei der Faservliesstoff aus Naturfasern oder einer Mischung aus Naturfasern und verrottbaren synthetischen Fasern gebildet und die selbsthaftende Beschichtung rückseitig in Form von Klebepunkten aufgebracht ist.

## Beschreibung

Die Erfindung betrifft ein textiles Flächengebilde zur Verwendung als Wandbekleidung, insbesondere als Ersatz für herkömmliche Malervliese aus Glasfasern.

Malervliese dienen als Untergrundvorbereitung für Maler- und Armierungsarbeiten zum Ausgleich von Unebenheiten und Fehlstellen im Wandaufbau sowie zur Rißüberbrückung und Flächenarmierung. Bislang wurden hierzu Glasfaservliese verwendet, die in Dispersions- oder mineralischen Spachtelmassen eingebettet oder in ein auf den Wanduntergrund angelegtes Dispersionskleberbett eingelegt werden. Üblicherweise erfolgen anschließend Dispersionsanstriche mit dekorativem Charakter oder speziellen technischen Eigenschaften bezüglich der Oberfläche.

Die DE-U-81 24 330 beschreibt selbsthaftende Gewebebahnen, die aus natürlichen oder synthetischen anorganischen Fasern bestehen und bei denen die Kett- und Schußfäden mit einer dünnen Schicht aus Kunststoffappretur allseitig umhüllt sind.

Aus der EP-A-909 850 sind ferner Textilglasgewebebahnen bekannt, deren Faseranteil zu 100 % aus Textilglasfasern besteht und deren Rückseite eine selbsthaftende Klebeschicht aufweist, und bei denen mindestens diejenigen Abschnitte der Kett- und Schußfäden, welche die Vorderseite der Gewebebahn bilden, mit einer Dünnschicht aus einem polymeren Haftvermittler beschichtet sind, wobei die Dünnschicht einen ein- oder mehrfarbigen dekorativen Aufdruck trägt.

In jüngster Zeit besteht jedoch eine steigende Nachfrage nach Wandbekleidungen mit sehr feinen Oberflächenstrukturen zur Verwendung im Wohnbereich, die sich mit den bekannten Mineralfasergewebebahnen nicht verwirklichen läßt. Die bisher gebräuchlichen verrottungsfesten Malervliese aus 100 % künstlichen Mineralfasern (KMF-Fasern), insbesondere Glasfasern, sind gesundheitlich bedenklich, so daß bei der Verarbeitung der Glasvliesstoffe erhöhte Anforderungen an die Arbeitssicherheit bestehen. Die Glasvliese können wegen ihrer natürlichen Brüchigkeit nicht um Ecken herum tapeziert werden, die Bahnenware bricht an den Kanten. Des weiteren tritt unter Einwirkung der Baufeuchte eine leicht beißende Ausdünstung aus der Rollenware auf, die zu Augenreizung führt. Hautsensible Tapezierer müssen die Arbeiten mit KMF-Produkten daher meiden. Außerdem ist ein besonderer Arbeitsschutz bei Überkopfarbeiten zwingend nötig. Bei der Verwendung üblicher Malervliese wurden zudem bei ungleichem Kleberauftrag Glanzunterschiede und Fehlstellen im Fertiganstrich beobachtet.

Es besteht also weiterhin Bedarf an überstreichbaren Wandbekleidungen, mit denen im Wohnbereich feinste Oberflächenstrukturen verwirklicht werden können und die sich einfach und gesundheitlich unbedenklich verarbeiten lassen.

Die Erfindung schafft hierzu ein textiles Flächengebilde zur Verwendung als Wandbekleidung, insbesondere als Malervlies oder Tapete, das aus einem mineralfaserfreien Faservliesstoff gebildet und mit einer selbsthaftenden Beschichtung versehen ist. Erfindungsgemäß ist die selbsthaftende Beschichtung rückseitig in Form von Klebepunkten aufgebracht. Der Faservliesstoff ist aus Naturfasern oder einer Mischung aus Naturfasern und verrottbaren synthetischen Fasern hergestellt.

Da für den Faservliesstoff nur Naturfasern oder Mischungen aus Naturfasern und verrottbaren synthetischen Fasern verwendet werden, bestehen keine Bedenken in Bezug auf die Arbeitssicherheit und die Entsorgung der Wandbekleidungen nach dem Abwohnen. Durch die Bereitstellung der selbsthaftenden Beschichtung in Form von rückseitig auf den Faservliesstoff aufgebrachten Klebepunkten ist eine trockene Verlegung der erfindungsgemäßen Wandbekleidungen möglich. Es wird also kein Naßkleber mehr benötigt und das Auftragen des Klebers an die Wand entfällt. Aufgrund des geringeren Arbeitsaufwands werden Lohn- und Materialkosten eingespart.

Darüber hinaus wurde überraschenderweise festgestellt, daß die in Form von Klebepunkten vorgesehene selbsthaftende Beschichtung eine wesentlich bessere Haftung der Wandbekleidung am Untergrund bewirkt als ein vollflächig aufgetragener Kleber. Es kann also mit geringeren Klebermengen gearbeitet werden. Im Unterschied zu herkömmlichen Papiertapeten sind die erfindungsgemäßen Faservliesstoffe jedoch hinreichend reißfest, so daß sie auch wieder trocken abgezogen werden können.

Die punktuell vorhandene selbsthaftende Beschichtung zeigt schließlich eine geringere Wechselwirkung mit dekorativen Anstrichen, die auf die Vorderseite der Wandbekleidung aufgetragenen werden können. Glanzunterschiede oder Fehlstellen im Anstrich werden so sicher vermieden.

Gemäß einer besonders bevorzugten Ausführungsform der Erfindung ist der Faservliesstoff als ein für einen haftverstärkenden Anstrich durchlässiges Gelege ausgebildet. Bei dieser Ausführungsform der erfindungsgemäßen Wandbekleidung steht also eine große "offene" Fläche bereit, durch die ein nach der Verlegung der Vliesstoffbahnen auf deren Vorderseite aufgetragener Binderanstrich durchschlagen und den Vliesstoff bzw. das Malervlies dauerhaft mit der Wand verbinden kann. Die offene Fläche des Vliesstoffes kann dabei mit einem stark oder weniger stark in den Wanduntergrund penetrierenden Anstrich versehen werden, wobei die Penetrationsfähigkeit des haftverstärkenden Anstrichs über dessen Bindergehalt nahezu stufenlos einstellbar ist. Mit dem haftverstärkenden Anstrich kann somit entweder ein dauerhafter Verbund zwischen der Wandbekleidung und dem Untergrund hergestellt oder alternativ auch die Haftung zwischen Wandbekleidung und Untergrund so eingestellt werden, daß die Wandbekleidung nach dem Abwohnen trocken, ohne Tapetenablöser, Nagelwalze, Einweichen oder Abkratzen, abgezogen werden kann.

Gegenstand der Erfindung ist daher auch ein Wandaufbau mit einer Tragschicht und der auf die Tragschicht aufgebrachten selbsthaftenden Wandbekleidung aus Naturfasern bzw. einer Mischung aus Natur- und synthetischen Fasern, wobei die Wandbekleidung rückseitig mit Haftpunkten versehen ist, die eine Adhäsion zu allen streich- und tapezierfähigen Untergründen, wie beispielsweise in der VOB Teil B, DIN 1961, § 4 Ziff. 3 beschrieben, herstellt. Als Tragschicht bzw. Untergrund können mineralische Putze und glatte Baustoffe, Dispersionsaltanstriche und Neuspachtelflächen, Gipskartonbauplatten, Holzwerkstoffe wie Spanplatten und MDF sowie Wand und Bauelemente aller Art, einschließlich korrosionsgeschützter Metallflächen verwendet werden.

Besonders bevorzugt ist ein Binder auf das Flächengebilde aufgebracht, wobei die selbsthaftende Beschichtung direkt an die Tragschicht angrenzt und der Binder als ein haftverstärkender Anstrich auf die der Klebeschicht entgegengesetzten Seite des Flächengebildes aufgetragen ist und wobei der haftverstärkende Anstrich das Flächengebilde durchdringt und mit der Tragschicht verbindet.

Weitere Ausgestaltungen der Erfindung sind in den Unteransprüchen angegeben.

Der mineralfaserfreie Faservliesstoff kann in üblicher Weise als Gelege, insbesondere als Naßgelege, Spritzvlies oder Nadelvlies ausgeführt sein. Bevorzugt wird das Vlies unter Hochdruck wasserstrahlverfestigt, was neben der horizontalen noch zusätzlich eine vertikale Verankerung bewirkt, also zu einer höheren Bindung des Geleges bzw. der Fasern untereinander führt. Dem Verwendungszweck als Wandbekleidung entsprechend, weist der Faservliesstoff als Rohware vorzugsweise ein Flächengewicht von 50-100 g/m² auf.

Die Herstellung des Faservliesstoffs erfolgt vorzugsweise als ein Naturfaservliesstoff unter Verwendung von natürlichen Cellulosefasern, wie Baumwolle, Flachs, Hanf, Jute, unter Zugabe von synthetischen Fasern zur Erzielung besonderer mechanischer Festigkeiten und Eigenschaften. Bevorzugt ist der Faservliesstoff unter Verwendung von natürlichen Cellulosefasern und synthetischen Cellulosefasern, wie Sisal oder Zellwolle, und/oder Polyesterfasern gebildet.

Besonders bevorzugt ist ein Mischgelege aus natürlichen Cellulosefasern, Zellwolle und Polyesterfasern, wobei der Anteil der natürlichen Cellulosefasern wenigstens 20 Gew.-%, bevorzugt wenigstens 30 Gew.-%, betragen soll. Das Mischgelege kann zusätzlich durch Besprühen oder Tränken mit einem Bindemittel, mit oder ohne Wärmeeinwirkung, verfestigt sein. Gute Ergebnisse wurden mit einem Mischgelege aus etwa 25 bis 35 Gew-% natürlichen Cellulosefasern, 45 bis 55 Gew.-% Polyesterfasern und 10 bis 30 Gew.-% Vinylacetat als Bindemittel erzielt. Diese Gelege sind im allgemeinen kompostierbar und daher ökologisch besonders verträglich. Da keine Mineralfaserpartikel freigesetzt werden können, lassen sie sich außerdem im Wohnbereich unbedenklich verwenden. Der Anteil an hydrophilen Naturfasern von wenigstens 20 Gew.-% gewährleistet eine gute Durchdringung mit wasserlöslichen Anstrichstoffen und/ oder eine Bedruckbarkeit mit Dekorfarben.

Die rückseitig auf das Gelege aufgebrachten Klebepunkte bedecken vorzugsweise eine Fläche von höchstens 30 %, bevorzugt 23 ± 3 %, damit für den Durchtritt des Binders und die Anbindung des Faservliesstoffs an die Wand eine genügend große Fläche verbieibt. Die Menge des Kleberauftrags entspricht damit etwa 23 bis 30 g Trockensubstanz Kleber pro m² des Geleges. Der für die selbsthaftende Klebeschicht verwendete Kleber ist vorzugsweise ein Dispersionskleber auf der Grundlage eines weichmacherfreien Acrylsäureesterpolymers und so eingestellt, daß die Klebepunkte standfest bleiben und unter Druckeinwirkung nicht oder nur unwesentlich verlaufen. Dies kann durch eine entsprechende Erhöhung der Viskosität des Klebers erreicht werden. Unter selbsthaftend wird in diesem Zusammenhang, im Unterschied zu selbstklebend, eine Klebeeigenschaft verstanden, die durch eine relativ geringe Adhesion bei gleichzeitig hoher Kohäsion gekennzeichnet ist. Während des Tapezierens sind somit Standkorrekturen möglich, d.h. die Bahn kann abgenommen und erneut eingepaßt werden.

Der als haftverstärkende Anstrich eingesetzte Binder ist bevorzugt eine emissions- und lösungsmittelfreie ELF-Dispersionsfarbe, die transparent oder pigmentiert sein kann. Insbesondere eignen sich hier weichmacherfreie Acrylatbinder, die auch als Tiefengrund verwendet werden, und denen ein Anteil an Quarzmehl als Füllstoff zugesetzt sein kann. Durch Verwendung von ELF-Dispersionen kann die Ausdünstung gesundheitsbedenklicher Stoffe vermieden und die Verwendbarkeit im Wohnbereich gewährleistet werden.

Das erfindungsgemäße Flächengebilde kann als vorgefertigtes, bahnförmiges Malervlies oder Tapete, auf Rollen aufgewickelt und gegebenenfalls vordekoriert, bereitgestellt werden. Zur Anwendung wird der Wanduntergrund, falls erforderlich, fachgerecht vorbehandelt und das Vlies von der Rolle direkt auf die Tragschicht tapeziert, mittels eines Kunststoffspachtels fest angerieben und je nach Bedarf an der Wand zugeschnitten.

Ohne jegliche Zwischentrocknung kann danach der vorderseitige vollflächige Dispersionsanstrich erfolgen. Der Anstrich penetriert durch die im Vlies vorhandene offene Fläche, dringt in den Untergrund bzw. die Tragschicht ein und verklebt. Durch Auswahl besonders formulierter Dispersionsanstriche kann die Verklebung bzw. die Festigkeit der Verbindung zum Untergrund zusätzlich gesteuert werden. So wird bei Verwendung von bindemittelreichen Dispersionen eine dauerhafte feste Verbindung hergestellt, während die Verwendung von bindemittelarmen ELF-Kunststoffdispersionen oder Mineralfarben eine geringe Haftung ergibt, die ein trockenes Abziehen der erfindungsgemäßen Wandbekleidung nach dem Abwohnen ermöglicht.

Schließlich kann nach dem Trocknen des haftverstärkenden Dispersionsanstrichs noch ein weiterer Anstrich aufgebracht werden, der die gewünschte Deck- oder Füllkraft aufweist und/oder eine gewünschte dekorative Wirkung erzielt. Nach dem haftverstärkenden Dispersionsanstrich oder dem Deckanstrich sind keinerlei Klebestrukturen mehr erkennbar. Eine Wechselwirkung zwischen der Klebeschicht und dem vorderseitigen Anstrich, die zu Fehlstellen oder Glanzbildung führen könnte, wird durch die in Form von Klebepunkten vorliegende selbsthaftende Beschichtung sicher verhindert.

Durch eine entsprechende Ausrüstung des Faservliesstoffs, des haftverstärkenden Binders und/oder des Deckanstriches kann der Wandaufbau an die Brandschutzbestimmungen im Wohnbereich angepaßt werden. Insbesondere können der Faservliesstoff, der haftverstärkende Binder oder der Deckanstrich Zusätze enthalten, die ein selbstverlöschendes Brandverhalten sicherstellen. Die offene Struktur des Geleges ermöglicht die Dampfdiffusion und sorgt so für ein angenehmes Wohnklima.

## Patentansprüche

1. Textiles Flächengebilde zur Verwendung als Wandbekleidung, das aus einem mineralfaserfreien Faservliesstoff gebildet und mit einer selbsthaftenden Beschichtung versehen ist, wobei der Faservliesstoff aus Naturfasern oder einer Mischung aus Naturfasern und verrottbaren synthetischen Fasern gebildet und die selbsthaftende Beschichtung rückseitig in Form von Klebepunkten aufgebracht ist.

2. Textiles Flächengebilde nach Anspruch 1, **dadurch gekennzeichnet, daß** der Faservliesstoff ein für einen haftverstärkenden Dispersionsanstrich durchlässiges Gelege ist.

3. Textiles Flächengebilde nach Anspruch 1 oder 2, **dadurch gekennzeichnet, daß** der Faservliesstoff ein Naßgelege, Spritzvlies oder Nadelvlies ist.

4. Textiles Flächengebilde nach einem der Ansprüche 1 bis 3, **dadurch gekennzeichnet, daß** der Faservliesstoff ein unter Hochdruck wasserstrahlverfestigtes Naßgelege ist.

5. Textiles Flächengebilde nach einem der Ansprüche 1 bis 4, **dadurch gekennzeichnet, daß** der Faservliesstoff ein cellulosefaserhaltiges Mischgelege ist.

6. Textiles Flächengebilde nach Anspruch 5, **dadurch gekennzeichnet, daß** der Anteil an natürlichen Cellulosefasern im Faservliesstoff wenigstens 20 Gew.% beträgt.

7. Textiles Flächengebilde nach einem der Ansprüche 1 bis 6, **dadurch gekennzeichnet, daß** der Faservliesstoff Polyesterfasern enthält.

8. Textiles Flächengebilde nach einem der Ansprüche 1 bis 7, **dadurch gekennzeichnet, daß** die Klebepunkte standfest eingestellt sind.

9. Textiles Flächengebilde nach einem der Ansprüche 1 bis 7, **dadurch gekennzeichnet, daß** die Beschichtung durch Klebepunkte eine Fläche von höchstens 30 %, vorzugsweise 20 bis 26 % des Faservliesstoffs bedeckt.

10. Wandaufbau mit einer Tragschicht, einer auf die Tragschicht aufgebrachten Wandbekleidung gemäß den vorhergehenden Ansprüchen und auf die Wandbekleidung aufgebrachten Binder, wobei die selbsthaftende Beschichtung an die Tragschicht angrenzt und der Binder als ein haftverstärkender Anstrich auf die der selbsthaftenden Beschichtung entgegengesetzte Seite der Wandbekleidung aufgetragen ist und wobei der haftverstärkende Anstrich den Wandbelag durchdringt und mit der Tragschicht verbindet.

11. Wandaufbau nach Anspruch 10, **dadurch gekennzeichnet, daß** der Binder ein emissions- und lösungsmittelfreier Dispersionsanstrich ist.

12. Wandaufbau nach Anspruch 10 oder 11, **dadurch gekennzeichnet, daß** der Binder ein weichmacherfreier Acrylatbinder ist.

13. Wandaufbau nach einem der Ansprüche 10 bis 12, ferner **gekennzeichnet durch** einen auf den haftverstärkenden Anstrich aufgetragenen Deckanstrich.

14. Wandaufbau nach einem der Ansprüche 10 bis 13, **dadurch gekennzeichnet, daß** der haftverstärkende Anstrich den Faservliesstoff dauerhaft mit der Tragschicht verbindet.

15. Wandaufbau nach einem der Ansprüche 9 bis 12, **dadurch gekennzeichnet, daß** die Haftkraft des haftverstärkenden Anstrichs so eingestellt ist, daß der Faservliesstoff trocken abziehbar bleibt.
